# EUROPEAN PATENT SPECIFICATION

(11) **EP 4 544 747 B1**
(45) Date of publication and mention of the grant of the patent: **19.08.2026**
(21) Application number: 22952379.0
(22) Date of filing: 28.07.2022
(51) Int. Cl.: H04W 24/10, H04W 76/15, H04L 5/00

(54) **METHODS AND SYSTEMS FOR APPLICATION LAYER MEASUREMENT REPORTING BY A USER EQUIPMENT OPERATING IN A DUAL CONNECTIVITY MODE**
VERFAHREN UND SYSTEME ZUR ANWENDUNGSSCHICHTMESSUNGSMELDUNG DURCH EIN BENUTZERGERÄT MIT BETRIEB IN EINEM DUALEN KONNEKTIVITÄTSMODUS
PROCÉDÉS ET SYSTÈMES DE RAPPORT DE MESURE DE COUCHE D'APPLICATION PAR UN ÉQUIPEMENT UTILISATEUR FONCTIONNANT DANS UN MODE À DOUBLE CONNECTIVITÉ

(43) Date of publication of application: 30.04.2025
(73) Proprietor: Apple Inc., Cupertino CA 95014 (US)
(72) Inventor: KUO, Ping-Heng, Greater London UB11 1BB (GB); ROSSBACH, Ralf, 85579 Neubiberg (DE); CHENG, Peng, Beijing 100022 (CN); PALLE VENKATA, Naveen Kumar R., Cupertino, California 95014 (US); SIROTKIN, Alexander, 4673314 Herzliya (IL); XU, Fangli, Beijing 100022 (CN); CHEN, Yuqin, Beijing 100022 (CN)
(74) Representative: Rooney, John-Paul
(86) International application number: PCT/CN2022/108487
(87) International publication number: WO 2024/020917

(56) References cited:
- WO-A1-2021/098074
- WO-A1-2021/213481
- WO-A1-2021/228095
- WO-A1-2022/005356
- WO-A1-2022/005356
- WO-A1-2022/005360
- WO-A1-2023/212912
- CHINA UNICOM: "Summary document on AI 8.14 NR QoE SI", vol. RAN WG2, no. Electronic Meeting; 20210125 - 20210205, 23 January 2021 (2021-01-23), XP052170905, Retrieved from the Internet <URL:https://ftp.3gpp.org/tsg_ran/WG2_RL2/TSGR2_113-e/Docs/R2-2102243.zip R2-2102243 Summary document on AI 8.14 NR QoE SI.docx> [retrieved on 20210123]

## Description

### TECHNICAL FIELD

This application relates generally to wireless communication systems, including methods and systems for application layer measurement reporting using a split signaling radio bearer 4 (SRB4).

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In some deployments, the E-UTRAN may also implement NR RAT. In some deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

WO 2022/005360 A1 discloses methods, for a first radio access network node (RNN) in a wireless network, for configuring quality of experience (QoE) measurements by user equipment (UEs). Such methods include sending, to a UE connected to the first RNN, a QoE measurement configuration for one or more services provided by an application layer of the UE; and sending, to the UE, a configuration for access-layer multi-connectivity of the UE with a second RNN in the wireless network. Such methods also include receiving one or more QoE measurement reports, in accordance with the QoE measurement configuration, from at least one of the UE and the second RNN. The QoE measurement reports include measurements made by the UE while in multi-connectivity with the first and second RNNs. Embodiments also include complementary methods for a second RNN and a UE, as well as RNNs and UEs configured to perform such methods.

WO 2022/005356 A1 discloses methods for a user equipment (UE) to perform quality of experience, QoE, measurements configured by a wireless network. Such methods include sending, to a radio access network node (RNN) in the wireless network, an indication of the UE's support for one or more extended capabilities related to QoE measurement reporting; and receiving, from the RNN, a QoE measurement configuration for one or more services provided by the UE application layer.

WO 2021/098074 A1 discloses collection and reporting of quality of experience information.

### SUMMARY

The invention is defined in the claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 shows an example wireless communication system, according to embodiments described herein.
FIG. 2 illustrates an example SRB4 in dual connectivity mode, according to embodiments described herein.
FIG. 3 illustrates an example flow-chart of operations that may be performed by a UE, according to embodiments described herein.
FIG. 4 illustrates another example flow-chart of operations that may be performed by a UE, according to embodiments described herein.
FIG. 5 illustrates an example flow-chart of operations that may be performed by a base station, according to embodiments described herein.
FIG. 6 illustrates an example architecture of a wireless communication system, according to embodiments described herein.
FIG. 7 illustrates a system for performing signaling between a wireless device and a network device, according to embodiments described herein.

### DETAILED DESCRIPTION

In the present disclosure, various embodiments are related to systems and methods for transmission of an application layer measurement report or a quality of experience (QoE) report, to a network, from a UE in dual connectivity (DC) mode (e.g., 5G NR-DC mode). In particular, the application layer measurement report or the QoE report may be allocated to one or a plurality of segments, and the one or plurality of segments may be transmitted to the network using a radio bearer (e.g., a signaling radio bearer 4 (SRB4)) via a master node (MN) in a master cell group (MCG) and/or a secondary node (SN) in a secondary cell group (SCG). The network, as described herein, may also include a core network, such as a 5G core network, and so on.

In recent studies in 3GPP, an application layer measurement reporting framework is defined. A UE may be configured to perform application layer measurement(s) corresponding to an application on the UE, e.g., an application executing on the UE. The UE may receive a measurement report from the application and generate an application layer measurement report or a QoE report to report the application layer measurements to a network. In this disclosure, an application layer measurement may also mean a QoE measurement, and vice versa, and an application layer measurement report may also mean a QoE report, and vice versa. Further, the QoE report may be visible to a RAN, for example, to a base station, and may be referred to herein as a RAN-visible QoE report. The QoE report, in some cases, may not be visible to a RAN, and may be referred to herein as a RAN-invisible QoE report. A RAN-visible QoE report may be utilized by a RAN for network optimization. A QoE report, in general, may be utilized by the network for various purposes, including but not limited to, optimization of the network and/or the RAN, collect statistical information for analysis, and so on.

An NR-DC mode is an important deployment scenario for 5G networks, and support for the application layer measurement (or QoE measurement) reporting for the NR QoE framework is required to be supported. In other words, support for the QoE measurement configuration, the QoE reporting over the MN and SN for the NR-DC scenario is required to be supported. In addition, mobility continuity, an alignment of the QoE report and minimization of drive test (MDT), and so on are required to be supported for the NR-DC scenario, e.g., a UE connected to the MN and the SN in the MCG and the SCG, respectively. Further, the QoE measurement reporting for the mobility continuity scenario, in particular, for a UE moving at a high speed, such as in a high speed train, an air flight, and so on, may also be required to be supported.

Embodiments described herein provide solutions for QoE measurement reporting in an NR-DC scenario using an SRB4, maintaining continuity of the QoE measurement reporting over the MN and the SN, and/or in a mobility scenario in the NR-DC scenario, and so on.

A QoE report may be sent to the network using a radio bearer (e.g., an SRB4). The SRB4 may be configured as defined in 3GTPP Technical Specification (TS) 38.331. Accordingly, in some embodiments, the SRB4 may be used for a radio resource control (RRC) message including QoE report information. The SRB4 may use a dedicated control channel (DCCH) logical channel. By way of a non-limiting example, the SRB4 may be configured by the network after access stratum (AS) security activation.

In some embodiments, the QoE report may be sent using the SRB4, from the UE in an NR-DC mode, to the network. The QoE report may be based on a QoE measurement configuration and/or QoE reporting configuration may be sent to the MN and/or the SN to send to the network.

Reference will now be made in detail to representative embodiments/aspects illustrated in the accompanying drawings. The following description is not intended to limit the embodiments to one preferred embodiment. On the contrary, it is intended to cover obvious alternatives, combinations, modifications, and equivalents as can be included within the scope of the appended claims.

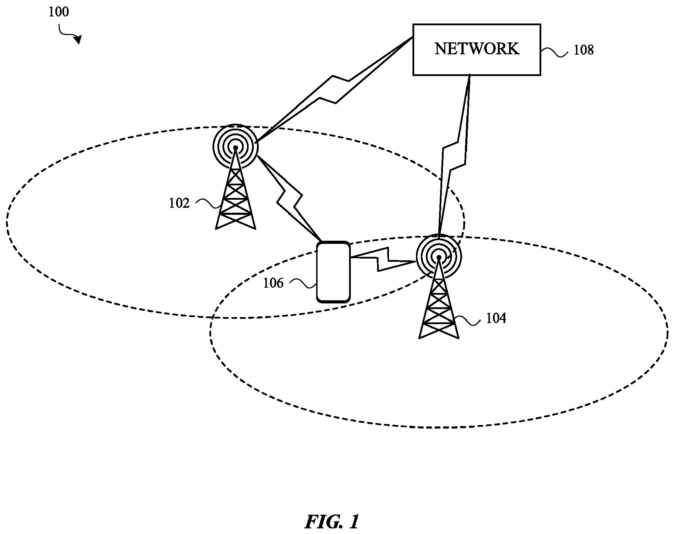

FIG. 1 shows an example wireless communication system, according to embodiments described herein. As shown in FIG. 1, a wireless communication system 100 may include base stations 102 and 104, a UE 106, and a network 108. In some embodiments, the base stations 102 and/or 104 may be an eNb, an eNodeB, a gNodeB, or an access point (AP) in a RAN and may support one or more radio access technologies, such as 4G, 5G, 5G new radio (5G NR), and so on. Further, the RAN may be a terrestrial network (TN) or a non-terrestrial network (NTN). Accordingly, the base stations 102 and/or 104 may be in an NTN, and/or a TN. A base station in an NTN may be on a satellite in the earth's orbit, or may be on a drone or an unmanned aerial vehicle (UAV). The UE 106 may be a phone, a smart phone, a tablet, a smartwatch, an Internet-of-Things (IoT), a vehicle, and so on.

In some embodiments, the UE 106 may be configured to perform application layer measurements (or QoE measurements), and report them using an application layer measurement report (or a QoE report) to the network 108. The UE 106 may be in an NR-DC mode with the base stations 102 and 104. By way of a non-limiting example, the base station 102 may be an MN in an MCG and the base station 104 may be an SN in an SCG. The UE in the NR-DC mode may report the QoE measurements to the network 108 via the MN and/or the SN, in accordance with embodiments, as described herein. Even though, only one SN is shown in FIG. 1, there may be more than one SNs to which the UE may be connected in a multi-connectivity (MC) mode.

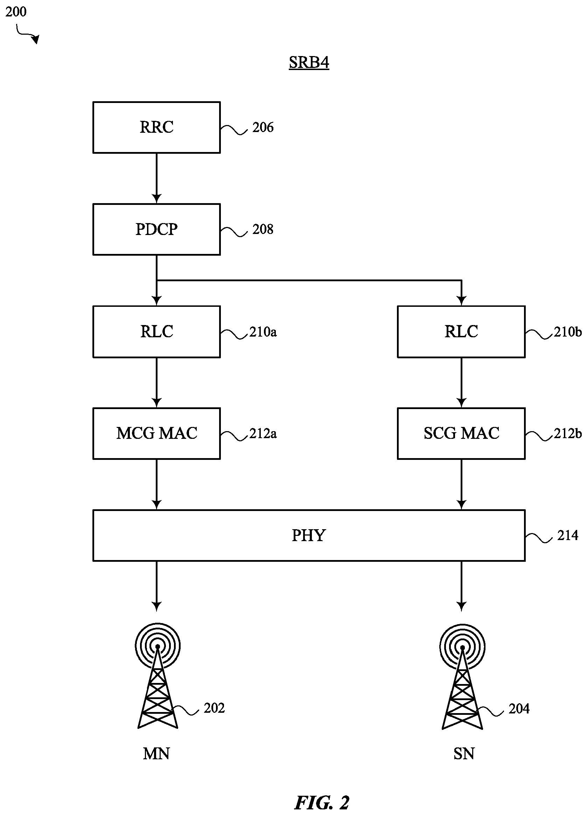

FIG. 2 illustrates an example SRB4 in dual connectivity mode, according to embodiments described herein. An SRB4 200 as defined in Rel-17 for application layer measurement reporting (or QoE reporting) is shown having different layers for a UE, such as the UE 106, connected to an MN 202 (e.g., the base station 102) and an SN 204 (e.g., the base station 104) in a DC mode (e.g., the NR-DC mode). The SRB4 200 of the UE 106 may have a radio resource control (RRC) layer 206 and a packet data convergence protocol (PDCP) layer 208.

In some embodiments, the UE 106 in a DC mode may be connected to the MN and the SN simultaneously, and accordingly a split bearer may be applied in which the PDCP layer 208 may be associated with two radio link control (RLC) entities 210a and 210b corresponding to the MN 202 and the SN 204, respectively. Thus, the RLC 210a and the RLC 210b may provide connectivity with the MN 202 in an MCG and the SN 204 in an SCG, respectively, via an MCG media access controller (MAC) 212a and an SCG MAC 212b, respectively, and through a common physical (PHY) layer 214. The MN 202 and the SN 204 may have an Xn interface for communication with each other.

Currently 3^{rd} Generation Partnership Project (3GPP) Technical Specification (TS) 38.331 describes a split SRB in DC scenarios only for SRB1 and SRB2, but not for SRB0 and SRB3. Accordingly, various embodiments in the present disclosure describe a split SRB for the SRB4 used for QoE measurement reporting via the MN and/or the SN in the DC (e.g., the NR-DC) scenario.

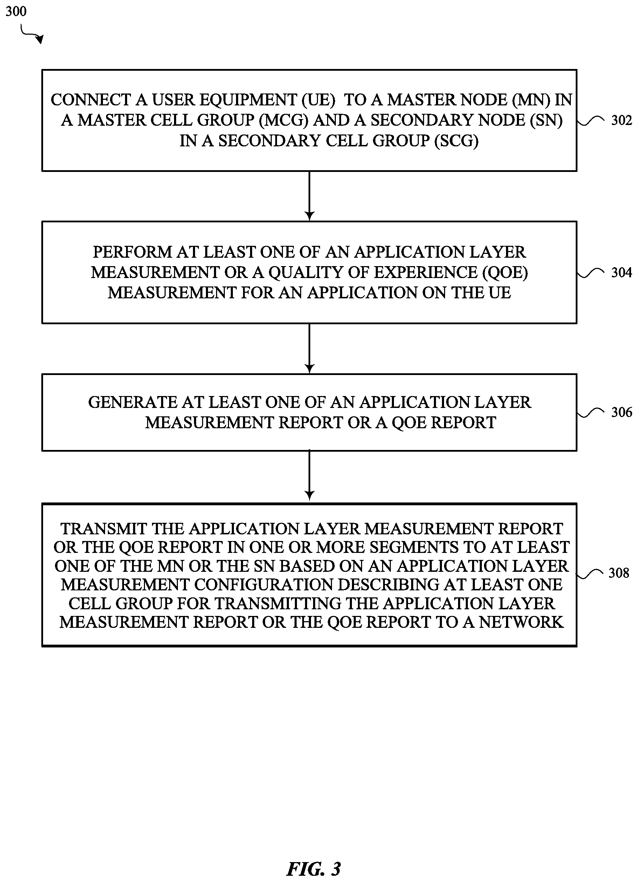

FIG. 3 illustrates a flow-chart of operations that are performed by a UE, according to embodiments described herein. As shown in a flow-chart 300, at 302, a UE (e.g., the UE 106) connects to an MN (e.g., the MN 202) in an MCG and an SN (e.g., the SN 204) in an SCG. In other words, the UE is in a DC mode (e.g., an NR-DC mode) with the MN and the SN.

At 304, the UE performs at least one of an application layer measurement or a QoE measurement for an application on the UE, such as an application executing on the UE. The UE may perform the application layer measurement or the QoE measurement and collect data corresponding to the application layer of the UE for the application. At 306, the UE generates at least one of an application layer measurement report or a QoE report. The application layer measurement report or the QoE report may be a RAN-visible or a RAN-invisible report. The RAN-invisible report may be container-based report.

In 3GPP TS 38.300 Rel-17, while transmitting the application layer measurement report or the QoE report to a network, the application layer measurement report or the QoE report may be optionally segmented into a plurality of segments, according to an rrc-SegAllowed field of an application layer measurement configuration (AppLayerMeasConfig), if a size of the application layer measurement report or the QoE report exceeds a predetermined or preconfigured threshold size (e.g., 9000 bytes) or a maximum size of a PDCP service data unit (SDU).

Accordingly, in some embodiments, at 308, based on the size of the application layer measurement report or the QoE report, the application layer measurement report or the QoE report may (in an example useful for understanding the invention) be transmitted to a network in one segment as a complete application layer measurement report or a QoE report, or, according to the invention, in more than one segment of the application layer measurement report or the QoE report. in the case of multiple segments, each segment of the more than one segment may carry different information of the application layer measurement report or the QoE report.

In some embodiments, the application layer measurement report or the QoE report is divided into more than one segment even when the size of the application layer measurement report or the QoE report does not exceed a predetermined or preconfigured threshold size or the maximum size of the PDCP SDU.

Accordingly, the application layer measurement report or the QoE report is transmitted to the network in one or more segments of the application layer measurement report or the QoE report via at least one of the MN or the SN. Whether the application layer measurement report or the QoE report should be transmitted via the MN, via the SN, or via the MN and SN both may be determined by the UE based on an application layer measurement configuration (e.g., AppLayerMeasConfig), which may describe at least one cell group, for example, an MCG, and/or an SCG, for transmission of the application layer measurement report or the QoE report to the network over different legs for the UE in the DC mode.

In some embodiments, when the application layer measurement report or the QoE report is segmented into more than one segment, segments of the application layer measurement report or the QoE report may be grouped in a first subset of a plurality of segments of the application layer measurement report or the QoE report, and/or a second subset of the plurality of segments of the application layer measurement report or the QoE report. In the present disclosure, one or more segments of the first subset of the plurality of segments of the application layer measurement report or the QoE report may be referred to as one or more segments of the application layer measurement report or the QoE report, for simplicity. Similarly, one or more segments of the second subset of the plurality of segments of the application layer measurement report or the QoE report may be referred to as one or more segments of the application layer measurement report or the QoE report. The one or more segments of the application layer measurement report or the QoE report may correspond to one or more segments of the first subset of the plurality of segments of the application layer measurement report or the QoE report and/or one or more segments of the second subset of the plurality of segments of the application layer measurement report or the QoE report.

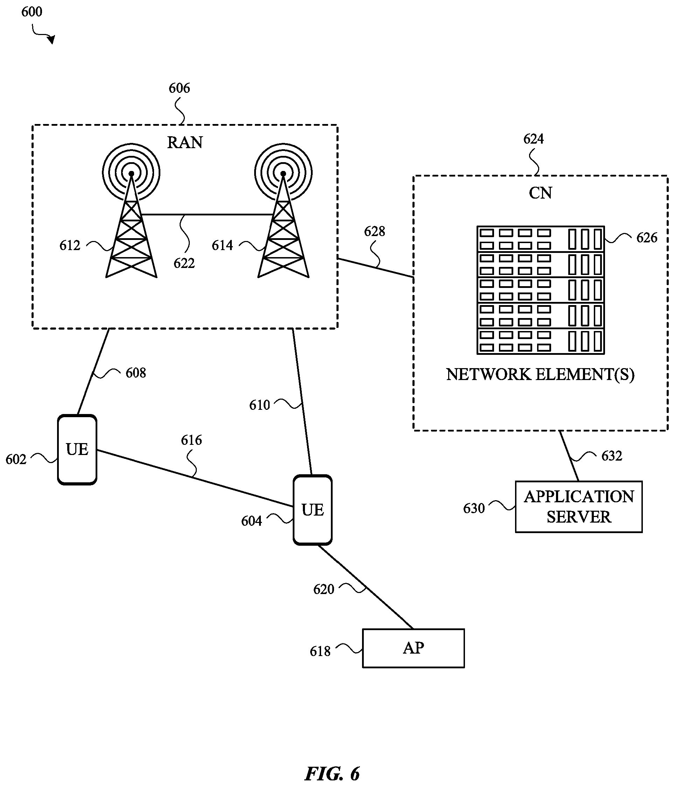

In some embodiments, a UE may be configured, using an information element (IE) of pdcp-config, to submit, at a PDCP layer (e.g., the PDCP layer 208), one or more segments of the first subset of the plurality of segments of the application layer measurement report or the QoE report to a first RLC entity (e.g., the RLC 210a or the RLC 210b), and one or more segments of the second subset of the plurality of segments of the application layer measurement report or the QoE report to a second RLC entity (e.g., the RLC 210b or the RLC 210a) for transmission to the network via an MCG and an SCG (or an SCG and an MCG), respectively. Upon receiving at least one segment of the one or more segments of the a subset (e.g., the first subset or the second subset) of the plurality of segments of the application layer measurement report or the QoE report at either the MN or the SN, the MN or the SN may transfer the received segment to the other node or base station via an Xn interface between the MN and the SN, such as an interface 622 shown in FIG. 6.

In some embodiments, a new indication may be introduced in the Xn interface or a F1 interface to identify an identity (ID) of the corresponding application layer measurement configuration (e.g., measConfigAppLayerId) and/or an ID of a segment of the first subset and/or the second subset of the plurality of segments of the application layer measurement report or the QoE report.

In some embodiments, a UE may receive an indication or an instruction to pause QoE reporting when, for example, a RAN is overloaded. The indication or the instruction to pause and/or resume the QoE reporting may be received in a pauseReporting field of the AppLayerMeasConfig. For the UE in the DC mode, the UE may be indicated or instructed to pause and/or resume QoE reporting on one or more legs, or via the MN and/or the SN, depending on, for example, RAN load conditions associated with an MCG and/or an SCG, and so on.

In some embodiments, and by way of a non-limiting example, the UE may receive an indication to pause transmission of the application layer measurement report or the QoE report to the network via the MCG and the SCG (or alternatively, via the MN and the SN), and the UE may, accordingly, pause transmission of the application layer measurement report or the QoE report, or at least one segment of the application layer measurement report or the QoE report to the network via the MCG (or alternatively, via the MN), and pause transmission of the application layer measurement report or the QoE report, or at least one segment of the application layer measurement report or the QoE report to the network via the SCG (or alternatively, via the SN). Upon receiving an indication to resume transmission of the application layer measurement report or the QoE report to the network via the MCG and the SCG (or alternatively, via the MN and the SN), the UE may, accordingly, resume transmission of the application layer measurement report or the QoE report, or at least one segment of the application layer measurement report or the QoE report to the network via the MCG (or alternatively, via the MN), and resume transmission of the application layer measurement report or the QoE report, or at least one segment of the application layer measurement report or the QoE report to the network via the SCG (or alternatively, via the SN).

In some embodiments, and by way of a non-limiting example, the UE may receive an indication to pause transmission of the application layer measurement report or the QoE report to the network via the MN, and the UE may, accordingly, pause transmission of the application layer measurement report or the QoE report, or at least one segment of the application layer measurement report or the QoE report, to the network via the MN. The UE may, instead, transmit the application layer measurement report or the QoE report, or at least one segment of the application layer measurement report or the QoE report, to the network via the SN.

In some embodiments, and by way of a non-limiting example, the UE may receive an indication to resume transmission of the application layer measurement report or the QoE report to the network via the MCG (or alternatively, via the MN), and the UE may, accordingly, resume transmission of the application layer measurement report or the QoE report, or at least one segment of the application layer measurement report or the QoE report, to the network via the MCG (or alternatively, via the MN). In some embodiments, and by way of a non-limiting example, upon receiving an indication to resume transmission of the application layer measurement report or the QoE report to the network via the MN, the UE may pause transmission of the application layer measurement report or the QoE report, or at least one segment of the application layer measurement report or the QoE report, to the network via the SCG (or alternatively, via the SN), and transmit the application layer measurement report or the QoE report, or at least one segment of the application layer measurement report or the QoE report, to the network via the MCG (or alternatively, via the MN).

In some embodiments, and by way of a non-limiting example, the UE may receive an indication to pause transmission of the application layer measurement report or the QoE report to the network via the SCG (or alternatively, via the SN), and the UE may, accordingly, pause transmission of the application layer measurement report or the QoE report, or at least one segment of the application layer measurement report or the QoE report, to the network via the SCG (or alternatively, via the SN). The UE may, instead, transmit the application layer measurement report or the QoE report, or at least one segment of the application layer measurement report or the QoE report, to the network via the MCG (or alternatively, via the MN).

In some embodiments, upon receiving an indication to resume transmission of the application layer measurement report or the QoE report to the network via the SCG (or alternatively, via the SN), the UE may resume transmission of the application layer measurement report or the QoE report, or at least one segment of the application layer measurement report or the QoE report, to the network via the SCG (or alternatively, via the SN). In some embodiments, and by way of a non-limiting example, upon receiving an indication to resume transmission of the application layer measurement report or the QoE report to the network via the SCG (or alternatively, via the SN), the UE may pause transmission of the application layer measurement report or the QoE report, or at least one segment of the application layer measurement report or the QoE report, to the network via the MCG (or alternatively, via the MN), and transmit the application layer measurement report or the QoE report, or at least one segment of the application layer measurement report or the QoE report, to the network via the SCG (or alternatively, via the SN).

In some embodiments, an indication to pause and/or resume transmission via the MN and/or the SN may be received by the UE in an RRC signaling message or a MAC control element (MAC CE) from the MN and/or the SN. By way of a non-limiting example, a bitmap of two-bits may be used to indicate whether to pause and/or resume transmission via the MN and the SN. For example, a bitmap "00" may indicate pause transmission via the MN and the SN, a bitmap "01" may indicate pause transmission via the MN but resume/continue transmission via the SN, a bitmap "10" may indicate resume/continue transmission via the MN but pause transmission via the SN, and a bitmap "11" may indicate resume/continue transmission via the MN and the SN.

In some embodiments, the UE may be configured to ignore an indication to pause and/or resume transmission when received from an SN based on an instruction received from an MN, or to ignore an indication to pause and/or resume transmission when received from an MN based on an instruction received from an SN. In some embodiments, by way of a non-limiting example, the UE may prioritize an indication to pause and/or resume transmission when received from an MN or an SN based on one or more of an identity of the application layer measurement or the QoE measurement, a type of the application layer measurement or the QoE measurement, a geographic location of the UE, a channel quality of a link between the UE and the MN, a channel quality of a link between the UE and the SN, or a network slice associated with the received first indication or the second indication.

In some embodiments, an indication to pause and/or resume transmission via the MN and/or the SN may be applicable to only a RAN-visible QoE report or a RAN-invisible QoE report, or both.

In some embodiments, the QoE reporting via an MN and an SN may be controlled independently by the MN and the SN. Accordingly, a UE may pause QoE reporting to the MN when a pause indication is received by the UE from the MN in an MCG only, and the UE may pause QoE reporting to the SN when a pause indication is received by the UE from the SN in an SCG only. Similarly, the UE may resume QoE reporting to the MN when a resume indication is received by the UE from the MN in the MCG only, and the UE may resume QoE reporting to the SN when a resume indication is received by the UE from the SN in the SCG only.

In some embodiments, and by way of a non-limiting example, an indication to pause and/or resume transmission via the MN may be received via an SN in an SCG, and/or an indication to pause and/or resume transmission via the SN may be received via an MN in an MCG.

As described herein, in accordance with some embodiments, the plurality of segments of the application layer measurement report or the QoE report is transmitted to the network via a transmission path which may include the MN and/or the SN. Upon occurrence of a certain event, a UE may be instructed to change (or switch) the transmission path for QoE reporting. In other words, if the transmission path includes only the MN, the UE may be instructed to change the transmission path to include only the SN. Similarly, if the transmission path includes only the SN, the UE may be instructed to change the transmission path to include only the MN.

In some embodiments, and by way of a non-limiting example, the UE may be instructed to duplicate at least one segment of the application layer measurement report or the QoE report, and transmit via the MN and the SN both for redundancy purpose. By way of a non-limiting example, an instruction corresponding to whether the UE needs to duplicate each segment or stop duplicating each segment may be dynamically provided to the UE and/or updated for the UE.

In some embodiments, the certain event associated with an instruction to the UE to change the transmission path for QoE reporting may be related to, including but not limited to, a UE mobility level, a UE battery level, a geographic location of the UE, a channel quality of a link between the UE and an MN, a channel quality of a link between the UE and an SN, an identity of the application layer measurement or the QoE measurement, a type of the application layer measurement or the QoE measurement, a network slice associated with the application layer measurement or the QoE measurement, a size of the application layer measurement report or the QoE measurement report, a number of radio link failures in an MCG or an SCG, an activation or a deactivation of a cell in the MCG or the SCG, and/or a total number of active cells in the MCG or the SCG.

In some embodiments, the channel quality of the link between the UE and the MN and the UE and the SN may be determined based on measurement metrics, such as reference signal received power (RSRP), reference signal received quality (RSRQ), signal-to-interference-plus-noise ratio (SINR), and/or channel quality information (CQI). By way of a non-limiting example, the channel quality of the link between the UE and the MN and the UE and the SN may be determined based on a number of radio link failures.

As described herein, in accordance with some embodiments, a UE in a DC mode may be configured to transmit a QoE report via an MN-terminated bearer or an SN-terminated bearer. In other words, the QoE report may be transmitted via the MN or the SN, and, therefore, may require a transfer of received segments at the MN to the SN, and vice versa. Segments may be transmitted by the UE in a container of ULInformationTransferMRDC as specified in 3GPP TS 38.331. Transfer of the segment of the QoE report may be performed according to clause 10.10 of the 3GPP TS 37.340. By way of a non-limiting example, the UE may determine whether the QoE report should be transmitted via an MN (or an MCG), or an SN (or an SCG) based on an application layer measurement configuration (e.g., AppLayerMeasConfig), as received from the MN and/or the SN. The SN may send the AppLayerMeasConfig to the UE upon sending a request to the MN to send the AppLayerMeasConfig to the UE, and receiving an approval from the MN. The AppLayerMeasConfig may indicate a cell group for QoE reporting based on one or more of a protocol data unit (PDU) session ID list of the QoE report (e.g., a pdu-SessionIdList in MeasurementReportAppLayer), or visibility of the QoE report to a RAN.

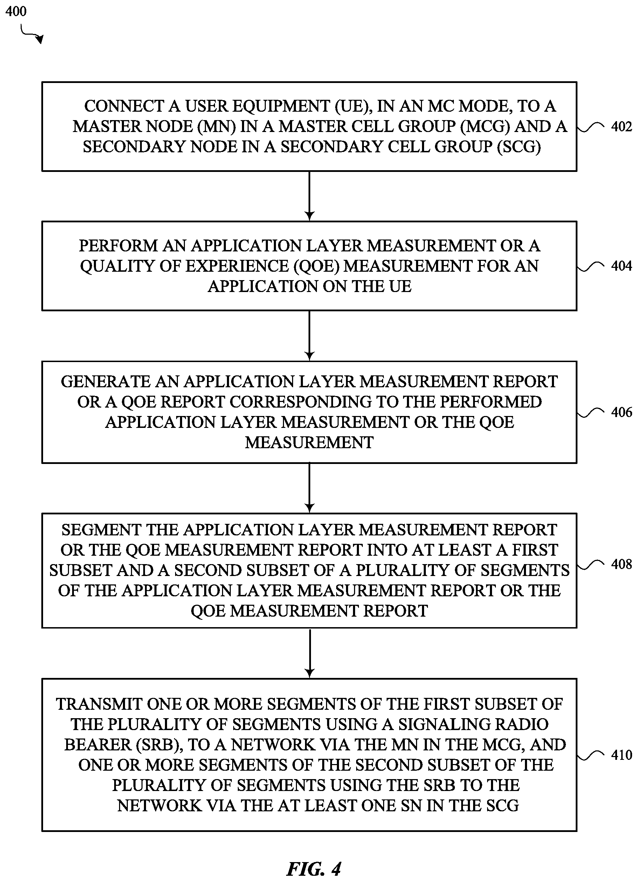

FIG. 4 illustrates another example flow-chart of operations that may be performed by a UE, according to embodiments described herein. As shown in a flow-chart 400, at 402, a UE (e.g., the UE 106) may be connected to an MN (e.g., the MN 202) in an MCG and at least one SN (e.g., the SN 204) in an SCG in a multi-connectivity (MC) mode.

At 404, the UE may perform at least one of an application layer measurement or a QoE measurement for an application on the UE, such as an application executing on the UE. The UE may perform the application layer measurement or the QoE measurement and collect data corresponding to the application layer of the UE for the application. At 406, the UE may generate at least one of an application layer measurement report or a QoE report. The application layer measurement report or the QoE report may be a RAN-visible or a RAN-invisible report, as described herein, in accordance with some embodiments.

As described herein, in accordance with some embodiments, in 3GPP TS 38.300 Rel-17, while transmitting the application layer measurement report or the QoE report to a network, the application layer measurement report or the QoE report may be segmented into a plurality of segments, according to an rrc-SegAllowed field of an application layer measurement configuration (AppLayerMeasConfig), if a size of the application layer measurement report or the QoE report exceeds a predetermined or preconfigured threshold size (e.g., 9000 bytes) or a maximum size of a PDCP service data unit (SDU). By way of a non-limiting example, the application layer measurement report or the QoE measurement report may be segmented based on a size of the application layer measurement report or the QoE report, or an information element used to set a configurable packet data convergence protocol (PDCP) parameter for a signaling radio bearer (SRB) and/or a data radio bearer (DRB).

In some embodiments, at 408, the application layer measurement report or the QoE report may be divided into at least a first subset of a plurality of segments and a second subset of the plurality of segments. By way of a non-limiting example, the application layer measurement report or the QoE report may be divided into the first subset and the second subset of the plurality of segments even when the size of the application layer measurement report or the QoE report does not exceed a predetermined or preconfigured threshold size or the maximum size of the PDCP SDU.

Accordingly, at 410, the application layer measurement report or the QoE report may be sent to the network via transmission of one or more segments of the first subset of the plurality of segments to the MN (in the MCG) using an SRB4, and via transmission of one or more segments of the second subset of the plurality of segments to the at least one SN (in the SCG) using the SRB4. Thus, the application layer measurement report or the QoE report may be transmitted over different legs for the UE in the MC mode.

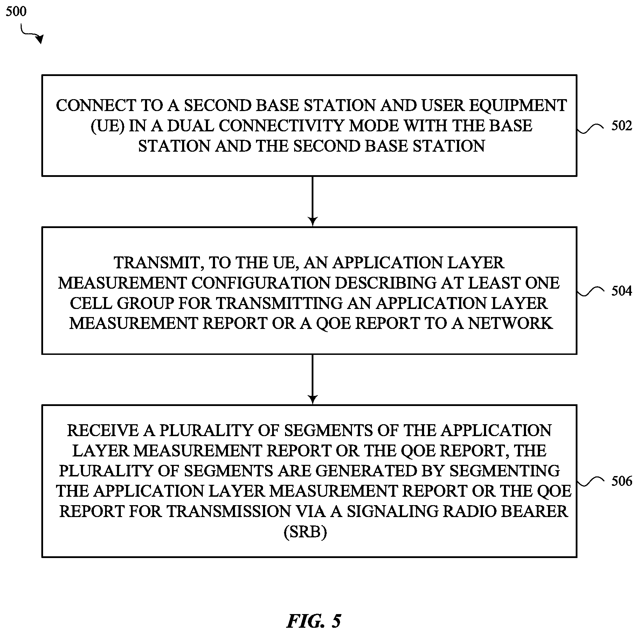

FIG. 5 illustrates an example flow-chart of operations that may be performed by a base station, according to embodiments described herein. As shown in a flow-chart 500, at 502, a base station (e.g., the base station 102) may connect to a second base station (e.g., the base station 104) via an Xn interface, and a UE (e.g., the UE 106). The UE may also be connected to the second base station, and thus, the UE may be in a DC mode. Further, the base station may an MN in an MCG, or an SN in an SCG.

At 504, the base station may transmit an application layer measurement configuration (e.g., AppLayerMeasConfig) describing at least one cell group for transmitting an application layer measurement report or a QoE report to a network. Since, the AppLayerMeasConfig is described herein in detail, in accordance with various embodiments, those details are not repeated again for brevity.

At 506, in accordance with the AppLayerMeasConfig transmitted to the UE, the base station may receive the application layer measurement report or the QoE report in one segment or a plurality of segments, in accordance with various embodiments described herein. Further, based on a type of a bearer associated with the SRB4, the one segment or the plurality of segments of the application layer measurement report or the QoE report may be transmitted to the second base station by the base station via the Xn interface, or may be received from the second base station via the Xn interface or the UE.

Embodiments contemplated herein include an apparatus having means to perform one or more elements of the method 300, 400, or 500. In the context of method 300, or 400, this apparatus may be, for example, an apparatus of a UE (such as a wireless device 702 that is a UE, as described herein). In the context of method 500, this apparatus may be, for example, an apparatus of a base station (such as a network device 720 that is a base station, as described herein).

Accordingly, various embodiments described in the present disclosure provide potential enhancements and/or solutions for QoE reporting using an SRB4 for a UE in a DC mode (e.g., an NR-DC mode, an multi-RAT DC (MR-DC) mode, and so on), and/or a MC mode.

Embodiments contemplated herein include one or more non-transitory computer-readable media storing instructions to cause an electronic device, upon execution of the instructions by one or more processors of the electronic device, to perform one or more elements of the method 300, 400, or 500. In the context of method 300, or 400, this non-transitory computer-readable media may be, for example, a memory of a UE (such as a memory 706 of a wireless device 702 that is a UE, as described herein). In the context of method 500, this non-transitory computer-readable media may be, for example, a memory of a base station (such as a memory 724 of a network device 720 that is a base station, as described herein).

Embodiments contemplated herein include an apparatus having logic, modules, or circuitry to perform one or more elements of the method 300, 400, or 500. In the context of method 300, or 400, this apparatus may be, for example, an apparatus of a UE (such as a wireless device 702 that is a UE, as described herein). In the context of method 500, this apparatus may be, for example, an apparatus of a base station (such as a network device 720 that is a base station, as described herein).

Embodiments contemplated herein include an apparatus having one or more processors and one or more computer-readable media, using or storing instructions that, when executed by the one or more processors, cause the one or more processors to perform one or more elements of the method 300, 400, or 500. In the context of method 300, or 400, this apparatus may be, for example, an apparatus of a UE (such as a wireless device 702 that is a UE, as described herein). In the context of the method 500, this apparatus may be, for example, an apparatus of a base station (such as a network device 720 that is a base station, as described herein).

Embodiments contemplated herein include a signal as described in or related to one or more elements of the method 300, 400, or 500.

Embodiments contemplated herein include a computer program or computer program product having instructions, wherein execution of the program by a processor causes the processor to carry out one or more elements of the method 300, 400, or 500. In the context of method 300, or 400, the processor may be a processor of a UE (such as a processor(s) 704 of a wireless device 702 that is a UE, as described herein), and the instructions may be, for example, located in the processor and/or on a memory of the UE (such as a memory 706 of a wireless device 702 that is a UE, as described herein). In the context of method 500, the processor may be a processor of a base station (such as a processor(s) 722 of a network device 720 that is a base station, as described herein), and the instructions may be, for example, located in the processor and/or on a memory of the base station (such as a memory 724 of a network device 720 that is a base station, as described herein).

FIG. 6 illustrates an example architecture of a wireless communication system, according to embodiments described herein. The following description is provided for an example wireless communication system 600 that operates in conjunction with the LTE system standards and/or 5G or NR system standards as provided by 3GPP technical specifications.

As shown by FIG. 6, the wireless communication system 600 includes UE 602 and UE 604 (although any number of UEs may be used). In this example, the UE 602 and the UE 604 are illustrated as smartphones (e.g., handheld touchscreen mobile computing devices connectable to one or more cellular networks), but may also comprise any mobile or non-mobile computing device configured for wireless communication.

The UE 602 and UE 604 may be configured to communicatively couple with a RAN 606. In embodiments, the RAN 606 may be NG-RAN, E-UTRAN, etc. The UE 602 and UE 604 utilize connections (or channels) (shown as connection 608 and connection 610, respectively) with the RAN 606, each of which comprises a physical communications interface. The RAN 606 can include one or more base stations, such as base station 612 and base station 614, that enable the connection 608 and connection 610.

In this example, the connection 608 and connection 610 are air interfaces to enable such communicative coupling, and may be consistent with RAT(s) used by the RAN 606, such as, for example, an LTE and/or NR.

In some embodiments, the UE 602 and UE 604 may also directly exchange communication data via a sidelink interface 616. The UE 604 is shown to be configured to access an access point (shown as AP 618) via connection 620. By way of example, the connection 620 can comprise a local wireless connection, such as a connection consistent with any IEEE 802.11 protocol, wherein the AP 618 may comprise a Wi-Fi^{®} router. In this example, the AP 618 may be connected to another network (for example, the Internet) without going through a CN 624.

In embodiments, the UE 602 and UE 604 can be configured to communicate using orthogonal frequency division multiplexing (OFDM) communication signals with each other or with the base station 612 and/or the base station 614 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 612 or base station 614 may be implemented as one or more software entities running on server computers as part of a virtual network. In addition, or in other embodiments, the base station 612 or base station 614 may be configured to communicate with one another via interface 622. In embodiments where the wireless communication system 600 is an LTE system (e.g., when the CN 624 is an EPC), the interface 622 may be an X2 interface. The X2 interface may be defined between two or more base stations (e.g., two or more eNBs and the like) that connect to an EPC, and/or between two eNBs connecting to the EPC. In embodiments where the wireless communication system 600 is an NR system (e.g., when CN 624 is a 5GC), the interface 622 may be an Xn interface. The Xn interface is defined between two or more base stations (e.g., two or more gNBs and the like) that connect to 5GC, between a base station 612 (e.g., a gNB) connecting to 5GC and an eNB, and/or between two eNBs connecting to 5GC (e.g., CN 624).

The RAN 606 is shown to be communicatively coupled to the CN 624. The CN 624 may comprise one or more network elements 626, which are configured to offer various data and telecommunications services to customers/subscribers (e.g., users of UE 602 and UE 604) who are connected to the CN 624 via the RAN 606. The components of the CN 624 may be implemented in one physical device or separate physical devices including components to read and execute instructions from a machine-readable or computer-readable medium (e.g., a non-transitory machine-readable storage medium).

In embodiments, the CN 624 may be an EPC, and the RAN 606 may be connected with the CN 624 via an S1 interface 628. In embodiments, the S1 interface 628 may be split into two parts, an S1 user plane (S1-U) interface, which carries traffic data between the base station 612 or base station 614 and a serving gateway (S-GW), and the S1-MME interface, which is a signaling interface between the base station 612 or base station 614 and mobility management entities (MMEs).

In embodiments, the CN 624 may be a 5GC, and the RAN 606 may be connected with the CN 624 via an NG interface 628. In embodiments, the NG interface 628 may be split into two parts, an NG user plane (NG-U) interface, which carries traffic data between the base station 612 or base station 614 and a user plane function (UPF), and the S1 control plane (NG-C) interface, which is a signaling interface between the base station 612 or base station 614 and access and mobility management functions (AMFs).

Generally, an application server 630 may be an element offering applications that use internet protocol (IP) bearer resources with the CN 624 (e.g., packet switched data services). The application server 630 can also be configured to support one or more communication services (e.g., VoIP sessions, group communication sessions, etc.) for the UE 602 and UE 604 via the CN 624. The application server 630 may communicate with the CN 624 through an IP communications interface 632.

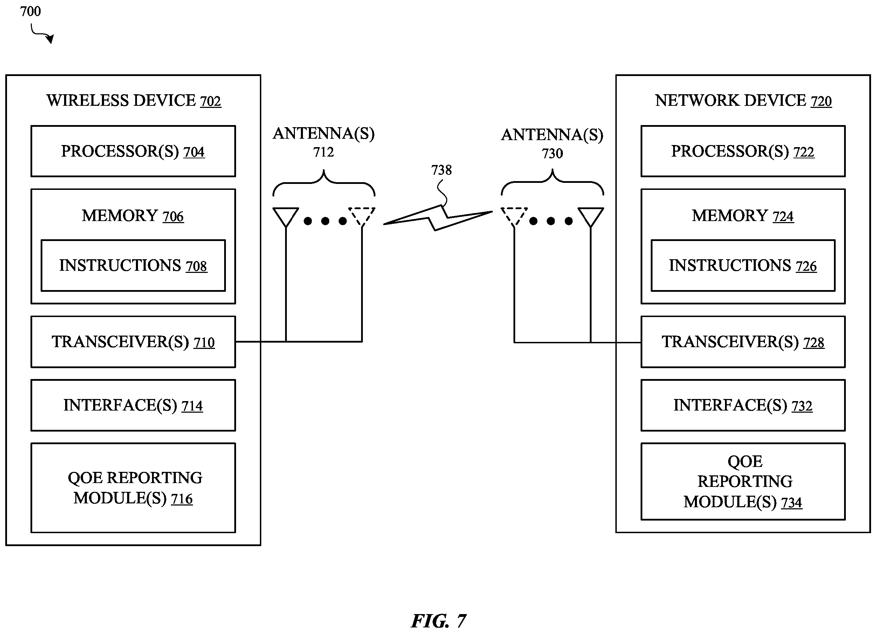

FIG. 7 illustrates a system 700 for performing signaling 738 between a wireless device 702 and a network device 720, according to embodiments described herein. The system 700 may be a portion of a wireless communication system as herein described. The wireless device 702 may be, for example, a UE of a wireless communication system. The network device 720 may be, for example, a base station (e.g., an eNB or a gNB) of a wireless communication system.

The wireless device 702 may include one or more processor(s) 704. The processor(s) 704 may execute instructions such that various operations of the wireless device 702 are performed, as described herein. The processor(s) 704 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 702 may include a memory 706. The memory 706 may be a non-transitory computer-readable storage medium that stores instructions 708 (which may include, for example, the instructions being executed by the processor(s) 704). The instructions 708 may also be referred to as program code or a computer program. The memory 706 may also store data used by, and results computed by, the processor(s) 704.

The wireless device 702 may include one or more transceiver(s) 710 that may include radio frequency (RF) transmitter and/or receiver circuitry that use the antenna(s) 712 of the wireless device 702 to facilitate signaling (e.g., the signaling 738) to and/or from the wireless device 702 with other devices (e.g., the network device 720) according to corresponding RATs.

The wireless device 702 may include one or more antenna(s) 712 (e.g., one, two, four, or more). For embodiments with multiple antenna(s) 712, the wireless device 702 may leverage the spatial diversity of such multiple antenna(s) 712 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 702 may be accomplished according to precoding (or digital beamforming) that is applied at the wireless device 702 that multiplexes the data streams across the antenna(s) 712 according to known or assumed channel characteristics such that each data stream is received with an appropriate signal strength relative to other streams and at a desired location in the spatial domain (e.g., the location of a receiver associated with that data stream). Some embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In some embodiments having multiple antennas, the wireless device 702 may implement analog beamforming techniques, whereby phases of the signals sent by the antenna(s) 712 are relatively adjusted such that the (joint) transmission of the antenna(s) 712 can be directed (this is sometimes referred to as beam steering).

The wireless device 702 may include one or more interface(s) 714. The interface(s) 714 may be used to provide input to or output from the wireless device 702. For example, a wireless device 702 that is a UE may include interface(s) 714 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 710/antenna(s) 712 already described) that allow for communication between the UE and other devices and may operate according to known protocols (e.g., Wi-Fi^{®}, Bluetooth^{®}, and the like).

The wireless device 702 may include a QoE reporting module 716. The QoE reporting module 716 may be implemented via hardware, software, or combinations thereof. For example, the QoE reporting module 716 may be implemented as a processor, circuit, and/or instructions 708 stored in the memory 706 and executed by the processor(s) 704. In some examples, the QoE reporting module 716 may be integrated within the processor(s) 704 and/or the transceiver(s) 710. For example, the QoE reporting module 716 may be implemented by a combination of software components (e.g., executed by a DSP or a general processor) and hardware components (e.g., logic gates and circuitry) within the processor(s) 704 or the transceiver(s) 710.

The QoE reporting module 716 may be used for various aspects of the present disclosure, for example, aspects of FIGs. 3-5, from the UE perspective.

The network device 720 may include one or more processor(s) 722. The processor(s) 722 may execute instructions such that various operations of the network device 720 are performed, as described herein. The processor(s) 722 may include one or more baseband processors implemented using, for example, a CPU, a DSP, an ASIC, a controller, an FPGA device, another hardware device, a firmware device, or any combination thereof configured to perform the operations described herein.

The network device 720 may include a memory 724. The memory 724 may be a non-transitory computer-readable storage medium that stores instructions 726 (which may include, for example, the instructions being executed by the processor(s) 722). The instructions 726 may also be referred to as program code or a computer program. The memory 724 may also store data used by, and results computed by, the processor(s) 722.

The network device 720 may include one or more transceiver(s) 728 that may include RF transmitter and/or receiver circuitry that use the antenna(s) 730 of the network device 720 to facilitate signaling (e.g., the signaling 738) to and/or from the network device 720 with other devices (e.g., the wireless device 702) according to corresponding RATs.

The network device 720 may include one or more antenna(s) 730 (e.g., one, two, four, or more). In embodiments having multiple antenna(s) 730, the network device 720 may perform MIMO, digital beamforming, analog beamforming, beam steering, etc., as has been described.

The network device 720 may include one or more interface(s) 732. The interface(s) 732 may be used to provide input to or output from the network device 720. For example, a network device 720 that is a base station may include interface(s) 732 made up of transmitters, receivers, and other circuitry (e.g., other than the transceiver(s) 728/antenna(s) 730 already described) that enables the base station to communicate with other equipment in a network, and/or that enables the base station to communicate with external networks, computers, databases, and the like for purposes of operations, administration, and maintenance of the base station or other equipment operably connected thereto.

The network device 720 may include a QoE reporting module 734. The QoE reporting module 734 may be implemented via hardware, software, or combinations thereof. For example, the QoE reporting module 734 may be implemented as a processor, circuit, and/or instructions 726 stored in the memory 724 and executed by the processor(s) 722. In some examples, the QoE reporting module 734 may be integrated within the processor(s) 722 and/or the transceiver(s) 728. For example, the QoE reporting module 734 may be implemented by a combination of software components (e.g., executed by a DSP or a general processor) and hardware components (e.g., logic gates and circuitry) within the processor(s) 722 or the transceiver(s) 728.

The QoE reporting module 734 may be used for various aspects of the present disclosure, for example, aspects of FIGs. 3-5, from a base station perspective.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form described. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

The systems described herein pertain to specific embodiments but are provided as examples. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope of the appended claims.

## Claims

1. A user equipment, UE, (702) comprising a memory (706) coupled to a processor (704), the processor configured to:
connect (302) the user equipment, UE, using a transceiver, to a master node, MN, in a master cell group, MCG, and a secondary node, SN, in a secondary cell group, SCG;
perform (304) at least one of an application layer measurement or a quality of experience, QoE, measurement for an application on the UE;
generate (306) at least one of an application layer measurement report or a QoE report based at least in part on the application layer measurement or the QoE measurement; transmit (308)
the application layer measurement report or the QoE report, divided into more than one segment, to at least one of the MN or the SN based on an application layer measurement configuration describing at least one cell group for transmitting the application layer measurement report or the QoE report to a network;
wherein the application layer measurement report or the QoE report does not exceed a maximum size of a packet data convergence protocol, PDCP, service data unit, SDU.

2. The user equipment (702) of claim 1, wherein:
the processor (704) is configured to,
receive an indication to pause transmission of the application layer measurement report or the QoE report to the network via the MCG and the SCG; and
pause transmission of the one or more segments of the application layer measurement report or the QoE report to the network via the MCG and the SCG.

3. The user equipment (702) of claim 1, wherein:
the processor (704) is configured to,
receive a first indication to pause transmission of the application layer measurement report or the QoE report to the network via the MCG; and
transmit the one or more segments of the application layer measurement report or the QoE report to the network via the SCG in response to the received first indication.

4. The user equipment (702) of claim 3, wherein:
the processor (704) is configured to,
receive a second indication to resume the transmission of the application layer measurement report or the QoE report to the network via the MCG; and
in response to the received second indication, transmit the one or more segments of the application layer measurement report or the QoE report to the network via the MCG.

5. The user equipment (702) of claim 4, wherein:
the first indication or the second indication is received in a radio resource control, RRC, signaling message or a MAC control element, MAC CE, from the MN or the SN; and
the application layer measurement report or the QoE report is a container-based report that is not visible to the MN or the SN in a radio access network, RAN, or a report that is visible to the MN or the SN in the RAN.

6. The user equipment (702) of claim 4 or claim 5, wherein:
the processor (704) is configured to,
ignore the first indication or the second indication received from the SN based on an instruction received from the MN;
ignore the first indication or the second indication received from the MN based on an instruction received from the SN; or
prioritize the first indication or the second indication received from the MN or the SN based on one or more of:
an identity of the application layer measurement or the QoE measurement;
a type of the application layer measurement or the QoE measurement;
a geographic location of the UE;
a channel quality of a link between the UE and the MN;
a channel quality of a link between the UE and the SN; or
a network slice associated with the received first indication or the second indication.

7. The user equipment (702) of claim 3, wherein:
the processor (704) is configured to,
receive a second indication to resume transmission of the application layer measurement report or the QoE report to the network via the MCG; and
in response to the received second indication:
pause transmission of the one or more segments of the application layer measurement report or the QoE report to the network via the SCG; and
transmit the one or more segments of the application layer measurement report or the QoE report to the network via the MCG.

8. The user equipment (702) of claim 1, wherein:
the processor (704) is configured to,
receive a first indication to pause transmission of the application layer measurement report or the QoE report to the network via the SCG; and
transmit the one or more segments of the application layer measurement report or the QoE report to the network via the MCG in response to the received first indication.

9. The user equipment (702) of claim 8, wherein:
the processor (704) is configured to,
receive a second indication to resume the transmission of the application layer measurement report or the QoE report to the network via the SCG; and
in response to the received second indication, transmit the one or more segments of the application layer measurement report or the QoE report to the network the SCG.

10. The user equipment (702) of claim 9, wherein:
the first indication or the second indication is received in a radio resource control, RRC, signaling message or a MAC control element, MAC CE, from the MN or the SN; and
the application layer measurement report or the QoE report is a container-based report that is not visible to the MN or the SN in a radio access network, RAN, or a report that is visible to the MN or the SN in the RAN.

11. The user equipment (702) of claim 9 or claim 10, wherein:
the processor (704) is configured to,
ignore the first indication or the second indication received from the SN based on an instruction received from the MN;
ignore the first indication or the second indication received from the MN based on an instruction received from the SN; or
prioritize the first indication or the second indication received from the MN or the SN based on one or more of:
an identity of the application layer measurement or the QoE measurement;
a type of the application layer measurement or the QoE measurement;
a geographic location of the UE;
a channel quality of a link between the UE and the MN;
a channel quality of a link between the UE and the SN; or
a network slice associated with the received first indication or the second indication.

12. The user equipment (702) of claim 8, wherein:
the processor (704) is configured to,
receive a second indication to resume the transmission of the application layer measurement report or the QoE report to the network via the SCG; and
in response to the received second indication:
pause transmission of the one or more segments of the application layer measurement report or the QoE report to the network via the MCG; and
transmit the one or more segments of the application layer measurement report or the QoE report to the network via the SCG.

13. The user equipment (702) of any preceding claim, wherein:
the processor (704) is configured to:
transmit the one or more segments of the application layer measurement report or the QoE report to the network via a transmission path including the MN or the SN; and
upon detecting a trigger event:
change the transmission path to include the SN instead of the MN or the MN instead of the SN; or
duplicate a signaling radio bearer corresponding to each segment of the plurality of segments of the application layer measurement report or the QoE report to transmit each segment of the plurality of segments of the application layer measurement report or the QoE report via the transmission path including the MN and the SN.

14. The user equipment (702) of claim 13, wherein the trigger event is associated with one of:
a UE mobility level;
a UE battery level;
a geographic location of the UE;
a channel quality of a link between the UE and the MN;
a channel quality of a link between the UE and the SN;
an identity of the application layer measurement or the QoE measurement;
a type of the application layer measurement or the QoE measurement;
a network slice associated with the application layer measurement or the QoE measurement;
a size of the application layer measurement report or the QoE measurement report;
a number of radio link failures in the MCG or the SCG;
an activation or a deactivation of a cell in the MCG or the SCG; or
a number of active cells in the MCG or the SCG.

15. The user equipment (702) of any preceding claim, wherein:
the application layer measurement configuration is received from the MN or the SN; and
the at least one cell group for transmitting the application layer measurement report or the QoE report to the network is selected by the UE based on a configuration including a protocol data unit, PDU, session ID list of the application layer measurement report or the QoE report visible to a RAN.

## Patentansprüche

1. Ein Benutzergerät, UE, (702), umfassend einen Speicher (706), der mit einem Prozessor (704) gekoppelt ist, wobei der Prozessor konfiguriert ist zum:
Verbinden (302) des Benutzergeräts, UE, unter Verwendung eines Transceivers mit einem Master-Knoten, MN, in einer Master-Zellengruppe, MCG, und einem sekundären Knoten, SN, in einer sekundären Zellengruppe, SCG;
Durchführen (304) mindestens einer von einer Anwendungsschichtmessung oder einer Messung der Erfahrungsqualität, QoE, für eine Anwendung auf dem UE; Erzeugen (306) mindestens eines von einem
Anwendungsschichtmessbericht oder einem QoE-Bericht basierend mindestens teilweise auf der Anwendungsschichtmessung oder der QoE-Messung;
Übertragen (308) des Anwendungsschichtmessberichts oder des QoE-Berichts, aufgeteilt in mehr als ein Segment, an mindestens eines von dem MN oder dem SN basierend auf einer Anwendungsschichtmesskonfiguration, die mindestens eine Zellengruppe zum Übertragen des Anwendungsschichtmessberichts oder des QoE-Berichts an ein Netzwerk beschreibt;
wobei der Anwendungsschichtmessbericht oder der QoE-Bericht eine maximale Größe einer Paketdatenkonvergenzprotokoll-, PDCP-, Dienstdateneinheit, SDU, nicht überschreitet.

2. Das Benutzergerät (702) nach Anspruch 1, wobei:
der Prozessor (704) konfiguriert ist zum,
Empfangen einer Anzeige zum Unterbrechen der Übertragung des Anwendungsschichtmessberichts oder des QoE-Berichts an das Netzwerk über die MCG und die SCG; und
Unterbrechen der Übertragung des einen oder der mehreren Segmente des Anwendungsschichtmessberichts oder des QoE-Berichts an das Netzwerk über die MCG und die SCG.

3. Das Benutzergerät (702) nach Anspruch 1, wobei:
der Prozessor (704) konfiguriert ist zum,
Empfangen einer ersten Anzeige zum Unterbrechen der Übertragung des Anwendungsschichtmessberichts oder des QoE-Berichts an das Netzwerk über die MCG; und
Übertragen des einen oder der mehreren Segmente des Anwendungsschichtmessberichts oder des QoE-Berichts an das Netzwerk über die SCG als Reaktion auf die empfangene erste Anzeige.

4. Das Benutzergerät (702) nach Anspruch 3, wobei:
der Prozessor (704) konfiguriert ist zum,
Empfangen einer zweiten Anzeige zum Wiederaufnehmen der Übertragung des Anwendungsschichtmessberichts oder des QoE-Berichts an das Netzwerk über die MCG; und
als Reaktion auf die empfangene zweite Anzeige, Übertragen des einen oder der mehreren Segmente des Anwendungsschichtmessberichts oder des QoE-Berichts an das Netzwerk über die MCG.

5. Das Benutzergerät (702) nach Anspruch 4, wobei:
die erste Anzeige oder die zweite Anzeige in einer Funkressourcensteuerungs-, RRC-, Signalisierungsnachricht oder einem MAC-Steuerelement, MAC CE, von dem MN oder dem SN empfangen wird; und
der Anwendungsschichtmessbericht oder der QoE-Bericht ein containerbasierter Bericht ist, der für den MN oder den SN in einem Funkzugangsnetzwerk, RAN, nicht sichtbar ist, oder ein Bericht, der für den MN oder den SN in dem RAN sichtbar ist.

6. Das Benutzergerät (702) nach Anspruch 4 oder Anspruch 5, wobei:
der Prozessor (704) konfiguriert ist zum,
Ignorieren der ersten Anzeige oder der zweiten Anzeige, die von dem SN empfangen wird, basierend auf einer Anweisung, die von dem MN empfangen wird;
Ignorieren der ersten Anzeige oder der zweiten Anzeige, die von dem MN empfangen wird, basierend auf einer Anweisung, die von dem SN empfangen wird; oder
Priorisieren der ersten Anzeige oder der zweiten Anzeige, die von dem MN oder dem SN empfangen wird, basierend auf einem oder mehreren von:
einer Identität der Anwendungsschichtmessung oder der QoE-Messung;
einem Typ der Anwendungsschichtmessung oder der QoE-Messung;
einem geografischen Standort des UE;
einer Kanalqualität einer Verbindung zwischen dem UE und dem MN;
einer Kanalqualität einer Verbindung zwischen dem UE und dem SN; oder
einem Netzwerkslice, der mit der empfangenen ersten Anzeige oder der zweiten Anzeige assoziiert ist.

7. Das Benutzergerät (702) nach Anspruch 3, wobei:
der Prozessor (704) konfiguriert ist zum,
Empfangen einer zweiten Anzeige zum Wiederaufnehmen der Übertragung des Anwendungsschichtmessberichts oder des QoE-Berichts an das Netzwerk über die MCG; und
als Reaktion auf die empfangene zweite Anzeige:
Unterbrechen der Übertragung des einen oder der mehreren Segmente des Anwendungsschichtmessberichts oder des QoE-Berichts an das Netzwerk über die SCG; und
Übertragen des einen oder der mehreren Segmente des Anwendungsschichtmessberichts oder des QoE-Berichts an das Netzwerk über die MCG.

8. Das Benutzergerät (702) nach Anspruch 1, wobei:
der Prozessor (704) konfiguriert ist zum,
Empfangen einer ersten Anzeige zum Unterbrechen der Übertragung des Anwendungsschichtmessberichts oder des QoE-Berichts an das Netzwerk über die SCG; und
Übertragen des einen oder der mehreren Segmente des Anwendungsschichtmessberichts oder des QoE-Berichts an das Netzwerk über die MCG als Reaktion auf die empfangene erste Anzeige.

9. Das Benutzergerät (702) nach Anspruch 8, wobei:
der Prozessor (704) konfiguriert ist zum,
Empfangen einer zweiten Anzeige zum Wiederaufnehmen der Übertragung des Anwendungsschichtmessberichts oder des QoE-Berichts an das Netzwerk über die SCG; und
als Reaktion auf die empfangene zweite Anzeige, Übertragen des einen oder der mehreren Segmente des Anwendungsschichtmessberichts oder des QoE-Berichts an das Netzwerk über die SCG.

10. Das Benutzergerät (702) nach Anspruch 9, wobei:
die erste Anzeige oder die zweite Anzeige in einer Funkressourcensteuerungs-, RRC-, Signalisierungsnachricht oder einem MAC-Steuerelement, MAC CE, von dem MN oder dem SN empfangen wird; und
der Anwendungsschichtmessbericht oder der QoE-Bericht ein containerbasierter Bericht ist, der für den MN oder den SN in einem Funkzugangsnetzwerk, RAN, nicht sichtbar ist, oder ein Bericht, der für den MN oder den SN in dem RAN sichtbar ist.

11. Das Benutzergerät (702) nach Anspruch 9 oder Anspruch 10, wobei:
der Prozessor (704) konfiguriert ist zum,
Ignorieren der ersten Anzeige oder der zweiten Anzeige, die von dem SN empfangen wird, basierend auf einer Anweisung, die von dem MN empfangen wird;
Ignorieren der ersten Anzeige oder der zweiten Anzeige, die von dem MN empfangen wird, basierend auf einer Anweisung, die von dem SN empfangen wird; oder
Priorisieren der ersten Anzeige oder der zweiten Anzeige, die von dem MN oder dem SN empfangen wird, basierend auf einem oder mehreren von:
einer Identität der Anwendungsschichtmessung oder der QoE-Messung;
einem Typ der Anwendungsschichtmessung oder der QoE-Messung;
einem geografischen Standort des UE;
einer Kanalqualität einer Verbindung zwischen dem UE und dem MN;
einer Kanalqualität einer Verbindung zwischen dem UE und dem SN;
oder
einem Netzwerkslice, der mit der empfangenen ersten Anzeige oder der zweiten Anzeige assoziiert ist.

12. Das Benutzergerät (702) nach Anspruch 8, wobei:
der Prozessor (704) konfiguriert ist zum,
Empfangen einer zweiten Anzeige zum Wiederaufnehmen der Übertragung des Anwendungsschichtmessberichts oder des QoE-Berichts an das Netzwerk über die SCG; und
als Reaktion auf die empfangene zweite Anzeige:
Unterbrechen der Übertragung des einen oder der mehreren Segmente des Anwendungsschichtmessberichts oder des QoE-Berichts an das Netzwerk über die MCG; und
Übertragen des einen oder der mehreren Segmente des Anwendungsschichtmessberichts oder des QoE-Berichts an das Netzwerk über die SCG.

13. Das Benutzergerät (702) nach einem der vorhergehenden Ansprüche, wobei:
der Prozessor (704) konfiguriert ist zum:
Übertragen des einen oder der mehreren Segmente des Anwendungsschichtmessberichts oder des QoE-Berichts an das Netzwerk über einen Übertragungspfad, der den MN oder den SN beinhaltet; und
bei Erkennen eines Auslöseereignisses:
Ändern des Übertragungspfades, so dass er den SN anstelle des MN oder den MN anstelle des SN beinhaltet; oder
Duplizieren eines Signalisierungsfunkträgers, der jedem Segment der Vielzahl von Segmenten des Anwendungsschichtmessberichts oder des QoE-Berichts entspricht, um jedes Segment der Vielzahl von Segmenten des Anwendungsschichtmessberichts oder des QoE-Berichts über den Übertragungspfad, der den MN und den SN beinhaltet, zu übertragen.

14. Das Benutzergerät (702) nach Anspruch 13, wobei das Auslöseereignis assoziiert ist mit einem von:
einem UE-Mobilitätsniveau;
einem UE-Batterieniveau;
einem geografischen Standort des UE;
einer Kanalqualität einer Verbindung zwischen dem UE und dem MN;
einer Kanalqualität einer Verbindung zwischen dem UE und dem SN;
einer Identität der Anwendungsschichtmessung oder der QoE-Messung;
einem Typ der Anwendungsschichtmessung oder der QoE-Messung;
einem Netzwerkslice, der mit der Anwendungsschichtmessung oder der QoE-Messung assoziiert ist;
einer Größe des Anwendungsschichtmessberichts oder des QoE-Messberichts;
einer Anzahl von Funkverbindungsfehlern in der MCG oder der SCG;
einer Aktivierung oder einer Deaktivierung einer Zelle in der MCG oder der SCG; oder
einer Anzahl von aktiven Zellen in der MCG oder der SCG.

15. Das Benutzergerät (702) nach einem der vorhergehenden Ansprüche, wobei:
die Anwendungsschichtmesskonfiguration von dem MN oder dem SN empfangen wird; und
die mindestens eine Zellengruppe zum Übertragen des Anwendungsschichtmessberichts oder des QoE-Berichts an das Netzwerk durch das UE basierend auf einer Konfiguration ausgewählt wird, die eine Protokolldateneinheit-, PDU-, Sitzungs-ID-Liste des Anwendungsschichtmessberichts oder des QoE-Berichts beinhaltet, die für ein RAN sichtbar ist.

## Revendications

1. Un équipement utilisateur, UE, (702) comprenant une mémoire (706) couplée à un processeur (704), le processeur étant configuré pour :
connecter (302) l'équipement utilisateur, UE, à l'aide d'un émetteur-récepteur, à un nœud maître, MN, dans un groupe de cellules maîtresses, MCG, et à un nœud secondaire, SN, dans un groupe de cellules secondaires, SCG ;
réaliser (304) au moins une parmi une mesure de couche d'application ou une mesure de qualité d'expérience, QoE, pour une application sur l'UE ;
générer (306) au moins un parmi un rapport de mesure de couche d'application ou un rapport QoE sur la base au moins en partie de la mesure de couche d'application ou de la mesure QoE ;
transmettre (308) le rapport de mesure de couche d'application ou le rapport QoE, divisé en plus d'un segment, à au moins l'un du MN ou du SN sur la base d'une configuration de mesure de couche d'application décrivant au moins un groupe de cellules pour la transmission du rapport de mesure de couche d'application ou du rapport QoE à un réseau ;
dans lequel le rapport de mesure de couche d'application ou le rapport QoE ne dépasse pas une taille maximale d'une unité de données de service, SDU, de protocole de convergence de données de paquet, PDCP.

2. L'équipement utilisateur (702) selon la revendication 1, dans lequel :
le processeur (704) est configuré pour :
recevoir une indication pour mettre en pause la transmission du rapport de mesure de couche d'application ou du rapport QoE au réseau via le MCG et le SCG ; et
mettre en pause la transmission des un ou plusieurs segments du rapport de mesure de couche d'application ou du rapport QoE au réseau via le MCG et le SCG.

3. L'équipement utilisateur (702) selon la revendication 1, dans lequel :
le processeur (704) est configuré pour :
recevoir une première indication pour mettre en pause la transmission du rapport de mesure de couche d'application ou du rapport QoE au réseau via le MCG ; et
transmettre les un ou plusieurs segments du rapport de mesure de couche d'application ou du rapport QoE au réseau via le SCG en réponse à la première indication reçue.

4. L'équipement utilisateur (702) selon la revendication 3, dans lequel :
le processeur (704) est configuré pour :
recevoir une seconde indication pour reprendre la transmission du rapport de mesure de couche d'application ou du rapport QoE au réseau via le MCG ; et
en réponse à la seconde indication reçue, transmettre les un ou plusieurs segments du rapport de mesure de couche d'application ou du rapport QoE au réseau via le MCG.

5. L'équipement utilisateur (702) selon la revendication 4, dans lequel :
la première indication ou la seconde indication sont reçues dans un message de signalisation de contrôle de ressource radio, RRC, ou un élément de contrôle MAC, MAC CE, à partir du MN ou du SN ; et
le rapport de mesure de couche d'application ou le rapport QoE sont un rapport basé sur un conteneur qui n'est pas visible par le MN ou le SN dans un réseau d'accès radio, RAN, ou un rapport qui est visible par le MN ou le SN dans le RAN.

6. L'équipement utilisateur (702) selon la revendication 4 ou la revendication 5, dans lequel :
le processeur (704) est configuré pour :
ignorer la première indication ou la seconde indication reçue à partir du SN sur la base d'une instruction reçue à partir du MN ;
ignorer la première indication ou la seconde indication reçue à partir du MN sur la base d'une instruction reçue à partir du SN ; ou
prioriser la première indication ou la seconde indication reçue à partir du MN ou du SN sur la base d'un ou plusieurs parmi :
une identité de la mesure de couche d'application ou de la mesure QoE ;
un type de la mesure de couche d'application ou de la mesure QoE ;
un emplacement géographique de l'UE ;
une qualité de canal d'une liaison entre l'UE et le MN ;
une qualité de canal d'une liaison entre l'UE et le SN ; ou
une slice de réseau associée à la première indication reçue ou à la seconde indication.

7. L'équipement utilisateur (702) selon la revendication 3, dans lequel :
le processeur (704) est configuré pour :
recevoir une seconde indication pour reprendre la transmission du rapport de mesure de couche d'application ou du rapport QoE au réseau via le MCG ; et
en réponse à la seconde indication reçue :
mettre en pause la transmission des un ou plusieurs segments du rapport de mesure de couche d'application ou du rapport QoE au réseau via le SCG ; et
transmettre les un ou plusieurs segments du rapport de mesure de couche d'application ou du rapport QoE au réseau via le MCG.

8. L'équipement utilisateur (702) selon la revendication 1, dans lequel :
le processeur (704) est configuré pour :
recevoir une première indication pour mettre en pause la transmission du rapport de mesure de couche d'application ou du rapport QoE au réseau via le SCG ; et
transmettre les un ou plusieurs segments du rapport de mesure de couche d'application ou du rapport QoE au réseau via le MCG en réponse à la première indication reçue.

9. L'équipement utilisateur (702) selon la revendication 8, dans lequel :
le processeur (704) est configuré pour :
recevoir une seconde indication pour reprendre la transmission du rapport de mesure de couche d'application ou du rapport QoE au réseau via le SCG ;
et
en réponse à la seconde indication reçue, transmettre les un ou plusieurs segments du rapport de mesure de couche d'application ou du rapport QoE au réseau via le SCG.

10. L'équipement utilisateur (702) selon la revendication 9, dans lequel :
la première indication ou la seconde indication est reçue dans un message de signalisation de contrôle de ressource radio, RRC, ou un élément de contrôle MAC, MAC CE, à partir du MN ou du SN ; et
le rapport de mesure de couche d'application ou le rapport QoE est un rapport basé sur un conteneur qui n'est pas visible par le MN ou le SN dans un réseau d'accès radio, RAN, ou un rapport qui est visible par le MN ou le SN dans le RAN.

11. L'équipement utilisateur (702) selon la revendication 9 ou la revendication 10, dans lequel :
le processeur (704) est configuré pour :
ignorer la première indication ou la seconde indication reçue à partir du SN sur la base d'une instruction reçue à partir du MN ;
ignorer la première indication ou la seconde indication reçue à partir du MN sur la base d'une instruction reçue à partir du SN ; ou
prioriser la première indication ou la seconde indication reçue à partir du MN ou du SN sur la base d'un ou plusieurs parmi :
une identité de la mesure de couche d'application ou de la mesure QoE ;
un type de la mesure de couche d'application ou de la mesure QoE ;
un emplacement géographique de l'UE ;
une qualité de canal d'une liaison entre l'UE et le MN ;
une qualité de canal d'une liaison entre l'UE et le SN ; ou
une slice de réseau associée à la première indication reçue ou à la seconde indication.

12. L'équipement utilisateur (702) selon la revendication 8, dans lequel :
le processeur (704) est configuré pour :
recevoir une seconde indication pour reprendre la transmission du rapport de mesure de couche d'application ou du rapport QoE au réseau via le SCG ; et
en réponse à la seconde indication reçue :
mettre en pause la transmission des un ou plusieurs segments du rapport de mesure de couche d'application ou du rapport QoE au réseau via le MCG ; et
transmettre les un ou plusieurs segments du rapport de mesure de couche d'application ou du rapport QoE au réseau via le SCG.

13. L'équipement utilisateur (702) selon l'une des revendications précédentes, dans lequel :
le processeur (704) est configuré pour :
transmettre les un ou plusieurs segments du rapport de mesure de couche d'application ou du rapport QoE au réseau via un chemin de transmission incluant le MN ou le SN ; et
lors de la détection d'un événement déclencheur :
modifier le chemin de transmission pour inclure le SN au lieu du MN ou le MN au lieu du SN ; ou
dupliquer un bearer radio de signalisation correspondant à chaque segment de la pluralité de segments du rapport de mesure de couche d'application ou du rapport QoE pour transmettre chaque segment de la pluralité de segments du rapport de mesure de couche d'application ou du rapport QoE via le chemin de transmission incluant le MN et le SN.

14. L'équipement utilisateur (702) selon la revendication 13, dans lequel l'événement déclencheur est associé à l'un parmi :
un niveau de mobilité de l'UE ;
un niveau de batterie de l'UE ;
un emplacement géographique de l'UE ;
une qualité de canal d'une liaison entre l'UE et le MN ;
une qualité de canal d'une liaison entre l'UE et le SN ;
une identité de la mesure de couche d'application ou de la mesure QoE ;
un type de la mesure de couche d'application ou de la mesure QoE ;
une slice de réseau associée à la mesure de couche d'application ou à la mesure QoE ;
une taille du rapport de mesure de couche d'application ou
du rapport de mesure QoE ;
un nombre de défaillances de liaison radio dans le MCG ou le SCG ;
une activation ou une désactivation d'une cellule dans le MCG ou le SCG ; ou
un nombre de cellules actives dans le MCG ou le SCG.

15. L'équipement utilisateur (702) selon l'une des revendications précédentes, dans lequel :
la configuration de mesure de couche d'application est reçue à partir du MN ou du SN ; et
l'au moins un groupe de cellules pour la transmission du rapport de mesure de couche d'application ou du rapport de QoE au réseau est sélectionné par l'UE sur la base d'une configuration comportant une liste d'ID de session d'unité de données de protocole, PDU, du rapport de mesure de couche d'application ou du rapport de QoE visible à un RAN.
